(19) **Europäisches Patentamt European Patent Office Office européen des brevets**

(11) **EP 4 102 884 B1**

(12) **EUROPEAN PATENT SPECIFICATION**

(45) Date of publication and mention of the grant of the patent:
**27.08.2025 Bulletin 2025/35**

(21) Application number: **22177622.2**

(22) Date of filing: **07.06.2022**

(51) International Patent Classification (IPC):
**H04W 24/10** (2009.01)

(52) Cooperative Patent Classification (CPC):
**H04W 24/10**

(54) **HANDLING NEW RADIO (NR) TRAFFIC CONFIGURED WITH NON-INTEGER PERIODICITY**

HANDHABUNG VON NEUEM FUNKVERKEHR MIT NICHT-GANZZAHLIGER PERIODIZITÄT

GESTION DE TRAFIC DE NOUVELLE RADIO (NR) CONFIGURÉ AVEC UNE PÉRIODICITÉ NON ENTIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2021 PCT/CN2021/098692**
**02.09.2021 US 202117446817**

(43) Date of publication of application:
**14.12.2022 Bulletin 2022/50**

(73) Proprietor: **Apple Inc.**
**Cupertino CA 95014 (US)**

(72) Inventors:
• **YANG, Weidong**
**San Diego, 92131 (US)**
• **NIU, Huaning**
**Cupertino, 95014 (US)**
• **YAO, Chunhai**
**Beijing, 100022 (CN)**
• **YE, Chunxuan**
**San Diego, 92131 (US)**
• **ZHANG, Dawei**
**Cupertino, 95014 (US)**
• **SUN, Haitong**
**Cupertino, 95014 (US)**
• **HE, Hong**
**Cupertino, 95014 (US)**
• **OTERI, Oghenekome**
**San Diego, 92131 (US)**
• **FAKOORIAN, Seyed Ali Akbar**
**San Diego, 92131 (US)**
• **YE, Sigen**
**San Diego, 92131 (US)**
• **ZENG, Wei**
**Cupertino, 95014 (US)**
• **ZHANG, Yushu**
**Beijing, 100022 (CN)**

(74) Representative: **Rooney, John-Paul**
**Withers & Rogers LLP**
**2 London Bridge**
**London SE1 9RA (GB)**

(56) References cited:
• **VIVO: "Challenges and potential enhancements of XR", vol. RAN WG1, no. e-Meeting; 20210510 - 20210527, 11 May 2021 (2021-05-11), XP052006148, Retrieved from the Internet <URL:https://ftp.3gpp.org/tsg_ran/WG1_RL1/ TSGR1_105-e/Docs/R1-2104398.zip R1-2104398 Challenges and potential enhancements of XR.docx> [retrieved on 20210511]**
• **"3rd Generation Partnership Project; Technical Specification Group Radio Access Network; NR; Radio Resource Control (RRC) protocol specification (Release 16)", vol. RAN WG2, no. V16.4.1, 30 March 2021 (2021-03-30), pages 1 - 949, XP052000246, Retrieved from the Internet <URL:https://ftp.3gpp.org/Specs/archive/ 38_series/38.331/38331-g41.zip 38331-g41.docx> [retrieved on 20210330]**

**(Cont. next page)**

- **APPLE INC: "Views on XR specific capacity enhancements techniques", vol. RAN WG1, no. e-Meeting; 20220509 - 20220520, 29 April 2022 (2022-04-29), XP052153446, Retrieved from the Internet <URL:https://ftp.3gpp.org/tsg_ran/ WG1_RL1/TSGR1_109-e/Docs/R1-2204265.zip R1-2204265 system capacity.docx> [retrieved on 20220429]**

## EP 4 102 884 B1

### Description

### BACKGROUND

In a new radio (NR) network, for any of a variety of different reasons, there may be traffic that is generated at cadences which are not integer multiples of the units of time supported in NR. For example, augmented reality (AR) and virtual reality (VR) applications may have traffic that is not supported by any NR unit of time. In NR, the existing solution to address this type of timing issue is the over-provisioning of resources. However, this is an inefficient use of network resources and may cause a user equipment (UE) to experience a power drain. Accordingly, there is a need for enhancements for managing NR traffic that does not match NR's default timing.
The following documents are relevant: 3GPP DRAFT; R1-2104398; Contribution by VIVO which discusses challenges and potential enhancements of XR, and 3GPP TS 38.331 titles "3rd Generation Partnership Project; Technical Specification Group Radio Access Network; NR; Radio Resource Control (RRC) protocol specification (Release 16)".

### SUMMARY

The essential features of the invention are outlined by the appended independent claims.
Some exemplary embodiments are related to a processor of a user equipment (UE) configured to perform operations. The operations include receiving channel state information (CSI) configuration information corresponding to downlink new radio (NR) traffic with non-integer periodicity, wherein the CSI configuration information includes one of CSI measurement configuration information, CSI reporting configuration information or CSI measurement configuration information and CSI reporting configuration information, receiving CSI measurement resources and reporting CSI feedback to a network.

### Brief Description of the Drawings

Fig. 1 shows an exemplary network arrangement according to various exemplary embodiments.

Fig. 2 shows an exemplary user equipment (UE) according to various exemplary embodiments.

Fig. 3 shows an exemplary base station according to various exemplary embodiments.

Fig. 4 shows a signaling diagram of channel state information (CSI) feedback for eXtended reality (XR) according to various exemplary embodiments.

Fig. 5 shows an example of CSI reporting every two downlink (DL) semi-persistent scheduling (SPS) reception occasions.

Fig. 6 shows an example of CSI measurement resources configured as a multiple of the DL SPS periodicity.

Fig. 7 shows an example CSI-ReportPeriodicityAndOffset radio resource control (RRC) parameter configured to include an indication of the supported non-integer periodicity and offset.

Fig. 8 shows an example CSI-ResourcePeriodicityAndOffset RRC parameter configured to include an indication of the supported non-integer periodicity and offset for periodic and semi-persistent non-zero power (NZP) CSI-RS.

Fig. 9 shows an example CSI-ResourcePeriodicityAndOffset RRC parameter configured to include an indication of the supported non-integer periodicity and offset for periodic and semi-persistent CSI-IM.

Fig. 10 shows an example of the relationship between physical downlink shared channel (PDSCH) allocation, CSI measurement and CSI reporting according to various exemplary embodiments.

Fig. 11 shows a signaling diagram for implementing a connected discontinuous reception (cDRX) cycle for DL traffic configured with non-integer periodicity according to various exemplary embodiments.

Fig. 12 shows an example of using a combination of long DRX and short DRX to match DL traffic periodicity.

Fig. 13 shows an example of using physical downlink control channel (PDCCH) wake-up signal (WUS) to indicate dynamic traffic according to various exemplary embodiments.

Fig. 14 shows an example of an SRS-PeriodicityandOffset RRC parameter configured to include an indication of the supported non-integer periodicity and offset for sounding reference signals (SRS) according to various exemplary embodiments.

Fig. 15 shows an example of SRS-PeriodicityandOffset RRC parameter configured to include an indication of the supported non-integer periodicity and offset for SRS according to various exemplary embodiments.

## Detailed Description

The exemplary embodiments may be further understood with reference to the following description and the related appended drawings, wherein like elements are provided with the same reference numerals. The exemplary embodiments introduce techniques for handling traffic that may not match integer multiples of the units of time supported in new radio (NR). In one aspect, the exemplary embodiments relate to channel state information (CSI) feedback. As will be described in more detail below, some of the exemplary techniques described herein may enable a user equipment (UE) to implement power efficient CSI feedback for traffic such as eXtended reality (XR) traffic that may be generated at cadences which are not integer multiples of NR units of time (e.g., non-integer periodicity). In another aspect, the exemplary embodiments relate to connected discontinuous reception (cDRX). As will be described in more detail below, some of the exemplary techniques described herein enable the UE to implement cDRX for NR traffic that may be generated at cadences which are not integer multiples of NR's default timing.

The exemplary embodiments are described with regard to eXtended Reality (XR). Those skilled in the art will understand that XR is an umbrella term for different types of realities and may generally refer to real-and-virtual combined environments and associated human-machine interactions generated by computer technology and wearables. To provide some examples, the term XR may encompass augmented reality (AR), mixed reality (MR) and virtual reality (VR). However, any reference to XR being specific to a particular use case or type of traffic is merely provided for illustrative purposes. The exemplary embodiments apply to any type of NR traffic that may be generated at cadences which are not integer multiples of NR's default timing.

During operation, XR services may utilize multiple data flows in the uplink (UL) and/or downlink (DL). For example, in the DL, there may be a video stream, an audio stream and/or a data stream. In the UL, there may be a control stream and/or a pose stream. From a physical channel perspective, there may be different control channels and shared channels for each stream or multiple streams may share a control channel and/or shared channel. In some configurations, each stream may have different quality of service (QoS) requirements (e.g., block error rate (BLER), latency requirements, etc.).

In addition, the exemplary embodiments are described with regard to a UE. Those skilled in the art will understand that the UE may be any type of electronic component that is configured to communicate via a network, e.g., mobile phones, tablet computers, desktop computers, smartphones, phablets, embedded devices, wearables, Internet of Things (IoT) devices, etc. With regard to XR, in some configurations, the UE may be paired with a wearable device (e.g., a head mounted display (HMD), AR glasses, etc.). In this type of configuration, the UE may communicate directly with the network and then relay data to the wearable device which presents the XR content to the user (e.g., AR, VR, MR, etc.). In other configurations, the UE may be a wearable device that communicates directly with the network and presents the XR content to the user. Therefore, the UE as described herein is used to represent any electronic component that directly communicates with the network.

Although the exemplary embodiments are described with regard to providing enhancements for XR services, the exemplary embodiments are not limited to XR services and may apply to any type of NR traffic configured with non-integer periodicity. To provide another example, in industrial Internet of things (IIoT), traffic may be generated from an installed system with a long use life. In this type of scenario, it is difficult to modify the traffic generation periodicity to match any of NR's units of time. Those skilled in the art will understand how the exemplary techniques described herein may be applied to IIoT and any other type of NR traffic that may not match NR's default timing.

In one aspect, the exemplary embodiments introduce CSI feedback enhancements for XR. As will be described in more detail below, CSI feedback enhancements including measurement and/or reporting matched to traffic arrival are introduced to improve UE power saving and performance with regard to XR (or any other type of traffic that may not match NR's existing timing). Further, exemplary enhancements to enable periodic (P) and semi-persistent (SP) CSI measurement and reporting matched to the application traffic periodicity and offset are introduced In addition, CSI feedback measurement and/or reporting matched to semi-persistent scheduling (SPS) physical downlink shared channel (PDSCH) reception are introduced. The exemplary CSI feedback enhancements described herein may be used in conjunction with currently implemented CSI feedback techniques, future implementations of CSI feedback techniques or independently from other CSI feedback techniques.

In another aspect, the exemplary embodiments introduce cDRX enhancements for XR. As will be described in more detail below, UE power efficient cDRX configurations for XR traffic (or any other type of NR traffic that may not match NR's default timing) are introduced. These enhancements may include non-integer periodicity for cDRX configuration, using a combination of long DRX and short DRX to match traffic periodicity and using a physical downlink control channel (PDCCH) wake up signal (WUS) to indicate dynamic traffic. The exemplary cDRX enhancements described herein may be used in conjunction with currently implemented cDRX mechanisms, future implementations of cDRX mechanisms or independently from other cDRX mechanisms.

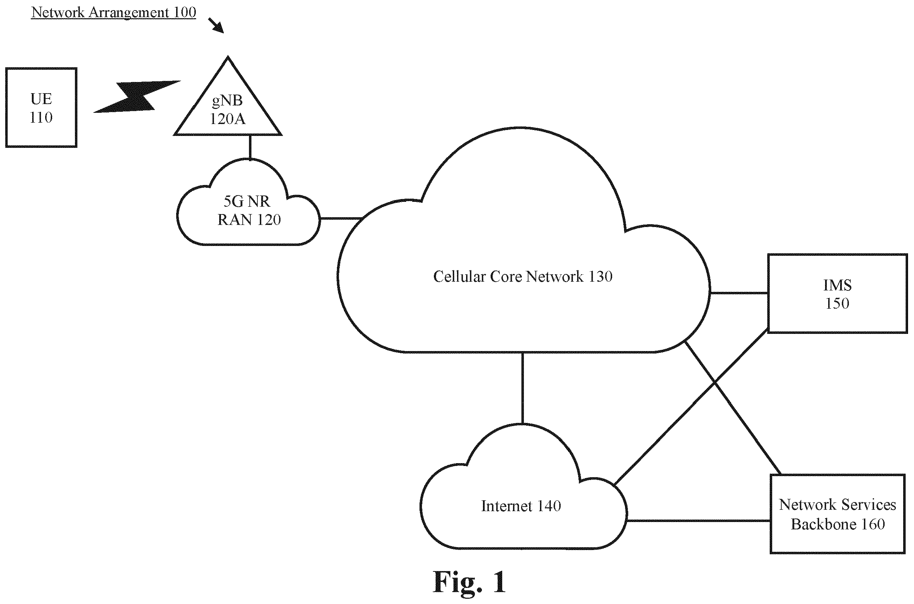

Fig. 1 shows an exemplary network arrangement 100 according to various exemplary embodiments. The exemplary network arrangement 100 includes a UE 110. Those skilled in the art will understand that the UE 110 may be any type of electronic component that is configured to communicate via a network, e.g., mobile phones, tablet computers, desktop computers, smartphones, phablets, embedded devices, wearables (e.g., HMD, AR glasses, etc.), Internet of Things (IoT) devices, etc. It should also be understood that an actual network arrangement may include any number of UEs being used by any number of users. Thus, the example of a single UE 110 is merely provided for illustrative purposes.

The UE 110 may be configured to communicate with one or more networks. In the example of the network configuration 100, the network with which the UE 110 may wirelessly communicate is a 5G NR radio access network (RAN) 120. However, the UE 110 may also communicate with other types of networks (e.g. 5G cloud RAN, a next generation RAN (NG-RAN), a long term evolution (LTE) RAN, a legacy cellular network, a WLAN, etc.) and the UE 110 may also communicate with networks over a wired connection. With regard to the exemplary embodiments, the UE 110 may establish a connection with the 5G NR RAN 120. Therefore, the UE 110 may have a 5G NR chipset to communicate with the NR RAN 120.

The 5G NR RAN 120 may be a portion of a cellular network that may be deployed by a network carrier (e.g., Verizon, AT&T, T-Mobile, etc.). The 5G NR RAN 120 may include, for example, cells or base stations (Node Bs, eNodeBs, HeNBs, eNBS, gNBs, gNodeBs, macrocells, microcells, small cells, femtocells, etc.) that are configured to send and receive traffic from UEs that are equipped with the appropriate cellular chip set.

The UE 110 may connect to the 5G NR-RAN 120 via the gNB 120A. Those skilled in the art will understand that any association procedure may be performed for the UE 110 to connect to the 5G NR-RAN 120. For example, as discussed above, the 5G NR-RAN 120 may be associated with a particular cellular provider where the UE 110 and/or the user thereof has a contract and credential information (e.g., stored on a SIM card). Upon detecting the presence of the 5G NR-RAN 120, the UE 110 may transmit the corresponding credential information to associate with the 5G NR-RAN 120. More specifically, the UE 110 may associate with a specific base station (e.g., gNB 120A). However, as mentioned above, reference to the 5G NR-RAN 120 is merely for illustrative purposes and any appropriate type of RAN may be used.

The network arrangement 100 also includes a cellular core network 130, the Internet 140, an IP Multimedia Subsystem (IMS) 150, and a network services backbone 160. The cellular core network 130 may be considered to be the interconnected set of components that manages the operation and traffic of the cellular network. The cellular core network 130 also manages the traffic that flows between the cellular network and the Internet 140. The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

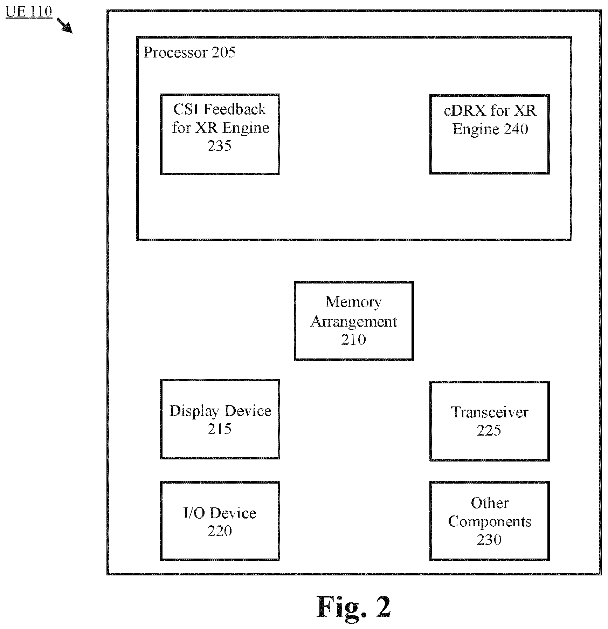

Fig. 2 shows an exemplary UE 110 according to various exemplary embodiments. The UE 110 will be described with regard to the network arrangement 100 of Fig. 1. The UE 110 may include a processor 205, a memory arrangement 210, a display device 215, an input/output (I/O) device 220, a transceiver 225 and other components 230. The other components 230 may include, for example, an audio input device, an audio output device, a power supply, a data acquisition device, ports to electrically connect the UE 110 to other electronic devices, etc.

The processor 205 may be configured to execute a plurality of engines of the UE 110. For example, the engines may include a CSI feedback for XR engine 235 and a cDRX for XR engine 240. The CSI feedback for XR engine 235 may perform various operations related to the exemplary CSI feedback enhancements described herein. These operations may include, but are not limited to, receiving CSI configuration information, identifying CSI resources, performing CSI measurements and reporting CSI feedback. The cDRX for XR engine 240 may perform various operations related to the exemplary cDRX enhancements described herein. These operations may include, but are not limited to, receiving cDRX configuration information, implementing a cDRX cycle and receiving PDCCH.

The above referenced engines 235, 240 each being an application (e.g., a program) executed by the processor 205 is merely provided for illustrative purposes. The functionality associated with the engines 235, 240 may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines may also be embodied as one application or separate applications. In addition, in some UEs, the functionality described for the processor 205 is split among two or more processors such as a baseband processor and an applications processor. The exemplary embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen. The transceiver 225 may be a hardware component configured to establish a connection with the 5G NR-RAN 120 and/or any other appropriate type of network. Accordingly, the transceiver 225 may operate on a variety of different frequencies or channels (e.g., set of consecutive frequencies).

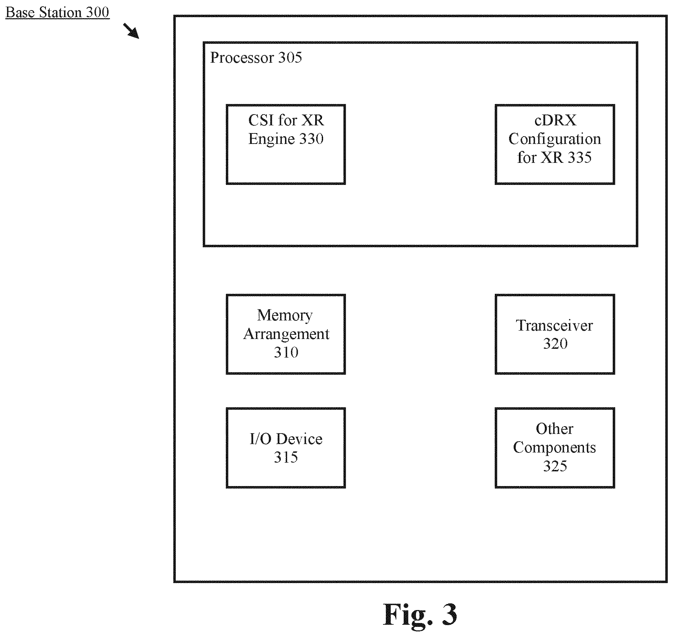

Fig. 3 shows an exemplary base station 300 according to various exemplary embodiments. The base station 300 may represent any access node (e.g., gNB 120A, etc.) through which the UE 110 may establish a connection and manage network operations.

The base station 300 may include a processor 305, a memory arrangement 310, an input/output (I/O) device 315, a transceiver 320, and other components 325. The other components 325 may include, for example, a battery, a data acquisition device, ports to electrically connect the base station 300 to other electronic devices, etc.

The processor 305 may be configured to execute a plurality of engines of the base station 300. For example, the engines may include a CSI for XR engine 330 and a cDRX configuration for XR engine 335. The CSI for XR engine 330 may perform various operations related to the exemplary CSI feedback enhancements described herein. The operations may include but are not limited to, transmitting CSI feedback configurations information, transmitting CSI resources and receiving CSI feedback. The cDRX configuration for XR engine 335 may perform various operations related to the exemplary cDRX enhancements described herein. The operations may include, but are not limited to, transmitting cDRX configurations information and transmitting PDCCH in accordance with the cDRX configuration.

The above noted engines 330, 335 being an application (e.g., a program) executed by the processor 305 is only exemplary. The functionality associated with the engines 330, 335 may also be represented as a separate incorporated component of the base station 300 or may be a modular component coupled to the base station 300, e.g., an integrated circuit with or without firmware. For example, the integrated circuit may include input circuitry to receive signals and processing circuitry to process the signals and other information. In addition, in some base stations, the functionality described for the processor 305 is split among a plurality of processors (e.g., a baseband processor, an applications processor, etc.). The exemplary embodiments may be implemented in any of these or other configurations of a base station.

The memory 310 may be a hardware component configured to store data related to operations performed by the base station 300. The I/O device 315 may be a hardware component or ports that enable a user to interact with the base station 300. The transceiver 320 may be a hardware component configured to exchange data with the UE 110 and any other UE in the system 100. The transceiver 320 may operate on a variety of different frequencies or channels (e.g., set of consecutive frequencies). Therefore, the transceiver 320 may include one or more components (e.g., radios) to enable the data exchange with the various networks and UEs.

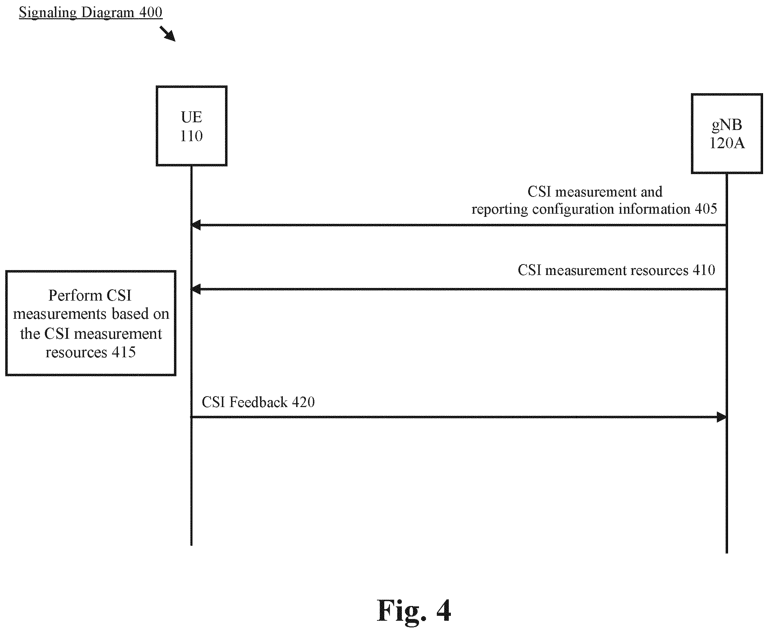

As mentioned above, in one aspect, the exemplary embodiments introduce CSI feedback enhancements for XR. Fig. 4 shows a signaling diagram 400 of CSI feedback for XR according to various exemplary embodiments. The signaling diagram 400 is described with regard to the network arrangement 100 of Fig. 1 and the UE 110 of Fig. 2.

The signaling diagram 400 includes the UE 110 and the gNB 120A. In 405, the UE 110 receives CSI measurement and/or reporting configuration information. In some embodiments, the CSI measurement and/or reporting configuration information may be provided to the UE 110 in one or more radio resource control (RRC) messages. In other embodiments, the CSI measurement and/or reporting configuration information may be provided to the UE 110 in one or more access control (MAC) control elements (CEs). However, the exemplary embodiments are not limited to RRC messages or MAC CEs, the CSI measurement and reporting configuration information may be provided to the UE 110 in any appropriate manner.

Various CSI feedback enhancements for XR will be described in detail below. Subsequently, examples of how the network may provide the UE 110 with the corresponding CSI measurement and reporting configuration information will be provided.

In 410, the gNB 120A configures CSI measurement resources to the UE 110. CSI resources may include channel measurement resources (CMR) and interference measurement resources (IMR). The CMRs may include one or more non-zero power (NZP) CSI-reference signals (RS). In NR, periodic and semi-persistent CMRs are supported. The periodicity and offset of these CMRs resources may be characterized in slots or in any other appropriate manner. Throughout this description, any reference to a particular type of CMR is merely provided for illustrative purposes, the exemplary embodiments may apply to any appropriate type of CMR.

The IMRs may include one or more zero power (ZP)-CSI-RS, NZP-CSI-RS or a combination thereof. Throughout this description, the terms "ZP IMR" and "CSI-IM" may be used interchangeably to identify the same type of CSI resources and "IMR" may refer to "ZP IMR," "NZP IMR" or a combination of "ZP IMR" and NZP IMR.". In NR, periodic and semi-persistent IMRs are supported. The periodicity and offset of these IMRs may be characterized in slots or in any other appropriate manner. Throughout this description, any reference to a particular type of IMR is merely provided for illustrative purposes, the exemplary embodiments may apply to any appropriate type of IMR.

In 415, the UE 110 performs CSI measurements based on the CSI measurement resources. In 420, the UE 110 reports CSI feedback to the gNB 120A.

For XR service, the stream may be generated at cadences which are not integer multiples of NR units of time. To provide one example, XR video stream generation may occur at 60 or 120 frames per second. The exemplary embodiments introduce CSI measurement and reporting techniques to handle these types of timing issues in an efficient manner.

In some embodiments, the exemplary enhancements may be applied to only IMR. For example, periodic/semi-persistent CMR may be generated at a periodicity of X milliseconds (ms) where X represents an integer value (e.g., 1, 2, 5, 10, etc.) while periodic/semi-persistent IMR may be generated at a periodicity of Y ms where Y represents a non-integer value (e.g., 25/3, 10/3, etc.). In another embodiments, the exemplary enhancements may be applied to only CMR. In a further embodiment, the exemplary enhancements may be applied to both CMR and IMR.

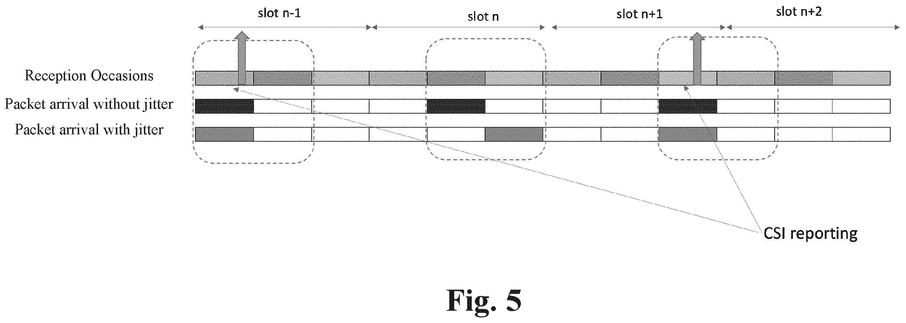

In one example, the periodicity of the CSI reporting may be the same as the DL SPS periodicity or a multiple of the DL periodicity. The periodicity of the CSI reporting may be non-integer. Fig. 5 shows an example of CSI reporting every two DL SPS reception occasions.

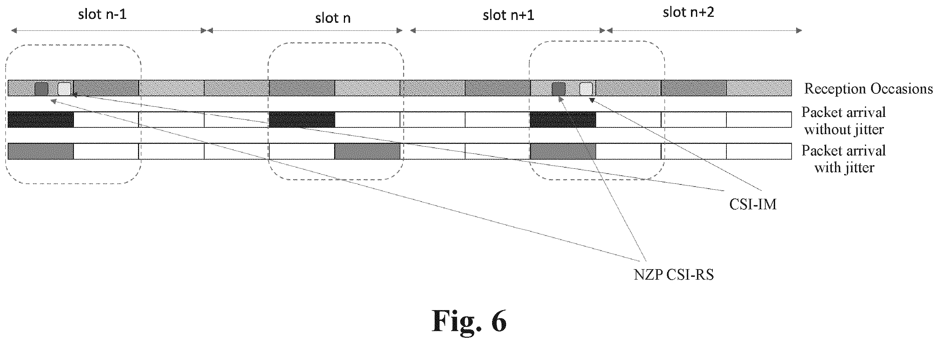

The periodicity of the CSI measurement resource may also be non-integer and based on the DL SPS periodicity or a multiple of the DL periodicity. For example, the CSI measurement resource periodicity may be represented by (M1/M2) where M1 and M2 each represent an integer value. Fig. 6 shows an example of CSI measurement resources configured as a multiple of the DL SPS periodicity.

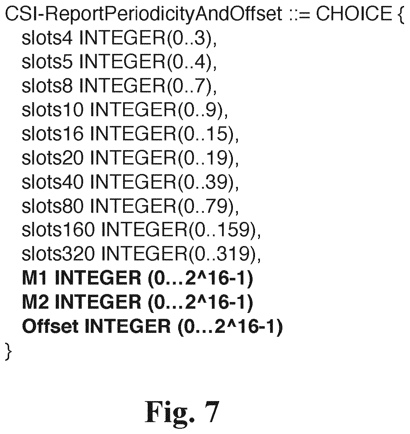

To enable periodic and semi-persistent CSI reporting with non-integer periodicity and offset, the CSI reporting and/or measurement configuration information may include an indication of the M1 integer, the M2 integer and an offset integer. Fig. 7 shows an example CSI-ReportPeriodicityAndOffset RRC parameter configured to include an indication of the supported non-integer periodicity and offset.

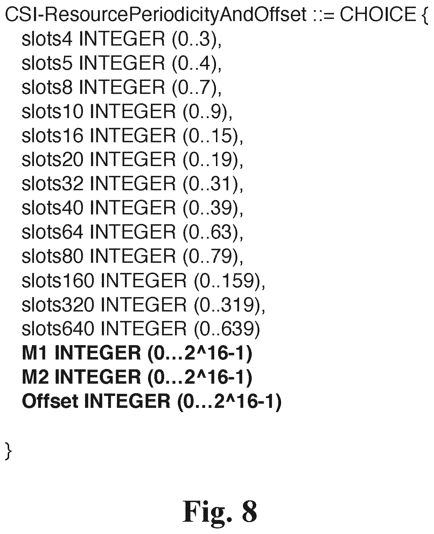

To indicate to the UE 110 the non-integer periodicity and offset for the CMR configuration, the CSI reporting and measurement configuration information may include an indication of the M1 integer, the M2 integer and an offset integer. Fig. 8 shows an example CSI-ResourcePeriodicityAndOffset RRC parameter configured to include an indication of the supported non-integer periodicity and offset for periodic and semi-persistent NZP CSI-RS.

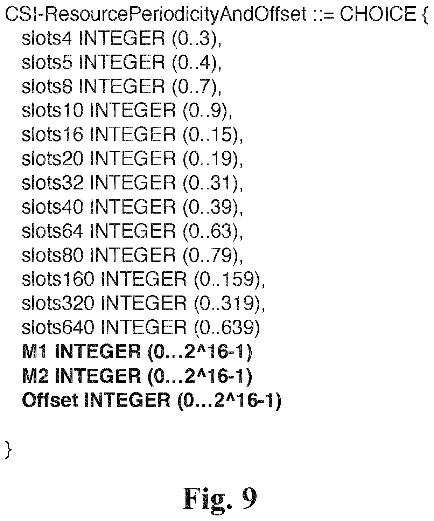

To indicate to the UE 110 the non-integer periodicity and offset for the IMR configuration, the CSI reporting and measurement configuration information may include an indication of the M1 integer, the M2 integer and an offset integer. Fig. 9 shows an example CSI-ResourcePeriodicityAndOffset RRC parameter configured to include an indication of the supported non-integer periodicity and offset for periodic and semi-persistent CSI-IM.

In some embodiments, an association between the DL SPS configuration and the CSI measurement and reporting configuration may be implemented. In one example, the CSI reporting and measurement configuration is associated with the DL SPS configuration. Thus, in this example, the UE 110 may receive DL SPS configuration information and then determine the CSI measurement and reporting configuration based on the preconfigured association. In another example, the DL SPS configuration is associated with the CSI measurement and reporting configurations. Thus, in this example, the UE 110 may receive the CSI measurement and reporting configuration information and then determine the DL SPS configuration based on the preconfigured association. In a further example, an information element (IE) may be introduced that indicates to the UE 110 a relationship between the DL SPS configuration and the CSI measurement and reporting configuration.

For the exemplary enhancements to the CSI measurement resources, it may be beneficial to restrict the presence of CSI-RS to the DL SPS PDSCH. In some embodiments, the CSI-FrequencyOccupation RRC parameter is not explicitly configured according to the DL SPS PDSCH frequency allocation. Instead, the UE 110 may adapt the CSI measurement operations to the DL SPS PDSCH configuration. This allows these enhancements to be implemented without creating additional RRC signaling overhead.

Further, in some embodiments, the CSI-ReportingBand RRC parameter is not explicitly configured according to the DL SPS PDSCH frequency allocation. Instead, the UE 110 may adapt the CSI reporting operations to the DL SPS PDSCH configuration. For example, if the PDSCH is from physical resource block (PRB) 10 to PRB 19, then CSI measurement is assumed for a CSI subband or subbands enclosed in the PDSCH only. This allows these enhancements to be implemented without additional RRC signaling overhead.

In some embodiments, an association of wideband and subband CSI and PDCSCH resource allocation may be implemented. For example, PDSCH may support two resource allocation types, e.g., Type 0 and Type 1. For Type 1, if interleaving is configured, this may indicate to the UE 110 that wideband CSI feedback is to be performed. For Type 1, if interleaving is not used, this may indicate to the UE 110 that PDSCH allocation is to be quantized according to the CSI subband size and subband CSI feedback is to be performed. When Type 0 is configured, this may indicate to the UE 110 that wideband feedback is to be performed. Thus, the PDSCH resource allocation type may indicate to the UE 110 how the CSI feedback is to be reported.

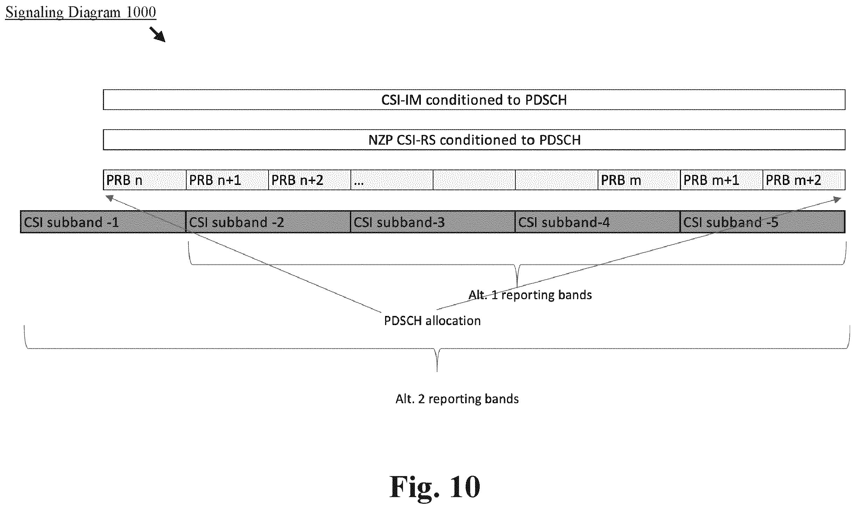

Fig. 10 shows an example 1000 of the relationship between PDSCH allocation, CSI measurement and CSI reporting according to carious exemplary embodiments. In the example 1000, the NZP CSI-RS and CSI-IM are limited to PRBs with PDSCH allocation. Thus, the NZP CSI-RS and the CSI-IM may be conditioned to the PDSCH. However, the exemplary embodiments are not limited to this arrangement. In other embodiments, the NZP CSI-RS and CSI-IM may be found outside the PRBs with PDSCH allocation.

The example 1000 shows two alternatives for CSI reporting. In alternative one, the reporting subbands may be the CSI subbands that completely overlap PRBs with PDCSH allocation. In alternative two, the reporting subbands may be any CSI subband that overlaps PRBs with PDSCH allocation. In some embodiments, extension to PRB n may be implemented for SCI subband-2.

Since the CSI timing may be configured to align with the traffic periodicity, in some embodiments, the hybrid automatic repeat request (HARQ) feedback timing may also be aligned with the traffic periodicity. Accordingly, periodic CSI feedback, semi-persistent CSI feedback or the exemplary CSI feedback triggered by DL SPS activation may be transmitted to the gNB 120A together with the HARQ feedback. This allows the UL transmission time duration to be minimized because instead of two separate PUCCH transmissions, one for CSI feedback and one for HARQ feedback, both CSI feedback and HARQ with their periodicity matched to the DL traffic can be sent in the same PUCCH. Thus, the CSI feedback may be multiplexed with the HARQ feedback on a PUCCH transmission that is matched to the periodicity of the DL traffic.

In addition, sounding reference signals (SRS) may be configured with a non-integer periodicity and offset. Those skilled in the art will understand that SRS generally refers to an uplink reference signal that may be used by a base station (e.g., gNB 120A) to estimate channel quality. SRS may be configured in a periodic or a semi-persistent manner. Further SRS for positioning may also be configured. The exemplary embodiments apply to periodic SRS, semi-persistent SRS or any other appropriate type of SRS.

The exemplary embodiments introduce a periodicity and offset for SRS transmission that is configured to match the periodicity of XR traffic. In some embodiments, the periodicity and offset for SRS may be matched with downlink traffic arrival. This may facilitate coordinated beamforming. In other embodiments, the periodicity and offset may be matched with uplink traffic so one transmission (e.g., SRS appended or prepended to the PUSCH) or two narrowly spaced transmissions of SRS and PUSCH may be supported.

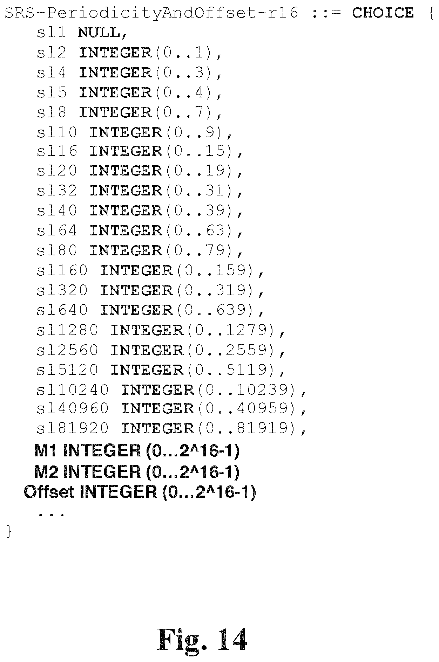

To indicate to the UE 110 the non-integer periodicity and offset for the SRS configuration, the base station may transmit SRS configuration information to the UE 110 using one or more RRC messages. The SRS configuration information may include an indication of the M1 integer, the M2 integer and an offset integer. Fig. 14 shows an example of an SRS-PeriodicityandOffset RRC parameter configured to include an indication of the supported non-integer periodicity and offset for SRS.

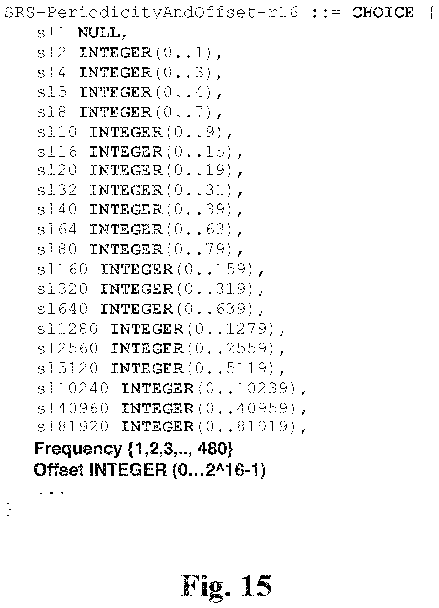

Alternatively, instead of M1 and M2 integers, the SRS configuration information may include a time parameter indicating a frequency at which SRS is to be transmitted. Fig. 15 shows an example of SRS-PeriodicityandOffset RRC parameter configured to include an indication of the supported non-integer periodicity and offset for SRS.

In some embodiments, the CSI feedback may be fully or partially based on the PDSCH demodulation reference signal (DMRS). When CSI feedback is based on PDSCH DMRS, the CMR may be provided by the DMRS of the scheduled PDSCH or configured PDSCH (e.g., SPS). The IMR may be provided either by un-used tones in a code division multiplexing (CDM) group of the DMRS or by ZP IMR and/or NZP IMR. The UE 110 may calculate channel quality indicator (CQI) according to the CMR and/or IMRs. Further, if PDSCH is at a rank larger than 1, then the UE 110 may also recommend rank adaption. For example, if the PDSCH is at rank 3, the UE 110 may report a rank indicator (RI) of 1, 2 or 3 in the feedback.

In another aspect, the exemplary embodiments relate to cDRX for XR. Those skilled in the art will understand that cDRX is a power saving mechanism implemented by the UE 110 in RRC connected state. The cDRX cycle may comprise an onDuration during which the UE 110 is scheduled to monitor the PDCCH. Outside of the onDuration, the UE 110 may have an opportunity to utilize a sleep mode of inactivity and conserve power. Throughout this description, reference to a power saving mode or a sleep mode of inactivity does not necessarily mean putting the processor 205, the transmitter, and the receiver of the UE 110 to sleep, in hibernation, or in deactivation. For example, the processor 205 (e.g., baseband and/or application) may continue to execute other applications or processes. The sleep mode of inactivity relates to conserving power by discontinuing a continuous processing functionality relating to operations that enable the UE 110 to receive data that may be transmitted to the UE 110 and transmit data to the network. The exemplary embodiments include enhancements for adapting cDRX to XR traffic which may be generated with a non-integer periodicity.

As indicated above, in NR, there may be DL traffic configured with a non-integer periodicity. For example, in XR, audio and video streams may be generated at cadences which are not integer multiples of NR's default timing. In one configuration of DL traffic with non-integer periodicity, the UE 110 may expect SPS transmissions from the network at slot

$mod(g(k), N_{SlotPerRadioFrame})$ where $g(k) = f\left(\frac{M_1}{M_2} \times k\right) + I_{shift}$ and $k$ is a running index. In addition, there may be an initial offset characterized in slots and two integers to derive the periodicity $M_1$ and $M_2$. In some embodiments, when jitter is expected, SPS configuration may be adjusted with the jitter range. However, the above referenced DL traffic characteristics are merely provided for illustrative purposes. The exemplary embodiments may be applicable to DL traffic configured with non-integer periodicity in any appropriate manner.

In a TDD system, there may be DL slots, UL slots and mixed slots (with both DL and UL symbols) in a radio frame. In some embodiments, a symbol may be a semi-statically configured as a DL symbol (e.g., semi-static DL symbol), semi-statically configured as an UL symbol (e.g., semi-static UL symbol) or semi-statically configured as a flexible symbol. If an occasion for DRX, CSI measurement or SR transmission with a non-integer periodicity configuration is configured to collide with an UL slot or at least one static/semi-statical UL symbol in a slot, then the occasion may be deferred to the next available occasion which does not collide with any semi-static UL symbol. If an occasion for CSI feedback with non-integer periodicity is configured to collide with an UL slot or at least one semi-statical DL symbol in a slot, then the occasion may be deferred to the next available occasion which does not collide with any semi-static DL symbol.

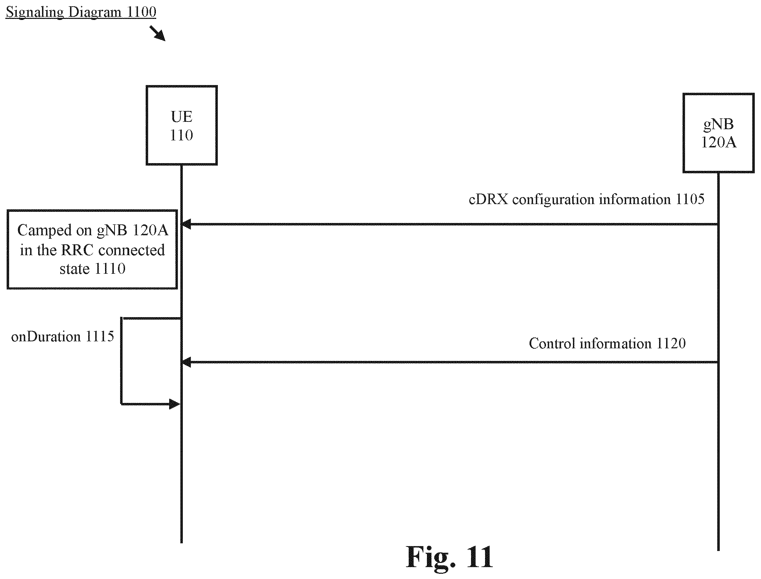

Fig. 11 shows a signaling diagram 1100 for implementing a cDRX cycle for DL traffic configured with non-integer periodicity according to various exemplary embodiments.

In 1105, the UE 110 receives cDRX configuration information. This configuration information may indicate to the UE 110 the configuration of a cDRX cycle for DL traffic configured with non-integer periodicity. In 1110, the UE 110 is camped on the gNB 120A in the RRC connected state and implements the cDRX cycle.

In 1115, an onDuration of the cDRX cycle occurs. In 1120, during the onDuration, the gNB 120A transmits control information to the UE 110 over the PDCCH. This control information may indicate to the UE 110 that a subsequent data reception or a subsequent transmission is scheduled.

To define a non-integer cDRX cycle, an additional long DRX value may be added to the DRX-config RRC parameter. For example, the long DRX value may be 1000/60 which is equal to 50/3 for 60 frames per second. In another example, the long DRX value may be 1000/45 which is equal to 200/9 for 45 frames per second. However, these values are merely provided for illustrative purposes, any appropriate value may be utilized.

Under conventional circumstances, DRX frames may be calculated using a subframe number (SFN) and a DRX offset value. Here, the conventional DRX cycle may be modified within one SFN periodicity as *floor([(SFN × 10) + subframe number] modulo (drxLongCycle)) = drxStartOffset.* In some embodiments, this floor function may be rounded or a ceil function may be used. The DRX cycle may be derived based on SFN value where SFN is 10 bit with a range of [0, 1023]. Therefore, at SFN wraparound, there may be an issue as show in the below example:

*SFN* = 1022, 1023,0,1,2, *using floor function,* $DRX\ cycle = \frac{50}{3}$ , *DRX offset* = 0; This results in

$$floor\left(mod\left([10220:10239, 0:20], \frac{50}{3}\right)\right) =$$

$$[3\ 4\ 5\ 6\ 7\ 8\ 9\ 10\ 11\ 12\ 13\ 14\ 15\ 16\ 0\ 1\ 2\ 3\ 4\ 5\ 0\ 1\ 2\ 3\ 4\ 5\ 6\ 7\ 8\ 9\ 10\ 11\ 12\ 13\ 14\ 15\ 16\ 0\ 1\ 2\ 3]$$

In one embodiment, the cDRX cycle may be derived using hyper-frame number (HFN) + SFN. This may not entirely eliminate the SFN wraparound issues but may mitigate the severity. The cDRX cycle may be represented as *floor ([(HFN × 10240 + SFN × 10) + subframe number] modulo (drxLongCycle)) = drxStartOffset.*

In some embodiments, for the SFN and HFN wrap around issue, the gNB 120A may send a MAC CE to indicate the change of drxStartOffset when needed. For instance, within the context of the example provided above where DRX offset = 0, at wrap around, the GNB 120A may instruct the UE 110 to switch the drxStartOffset to 11. Alternatively, a MAC CE may be sent in a broadcast or groupcast to multiple UEs since the SFN wrap is cell specific. In another alternative, UE 110 and the gNB 120A may be preconfigured with a non-integer DRX cycle adjustment parameter to autonomously adjust the DRX offset following the same rule.

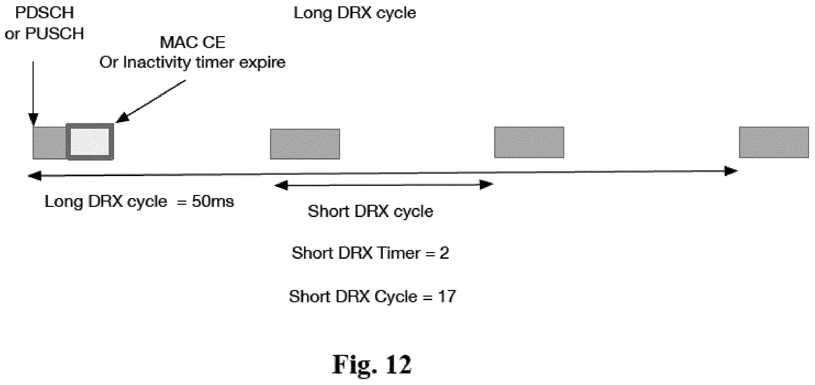

In a different approach, a combination of long DRX and short DRX may be used to match DL traffic periodicity. Fig. 12 shows an example of using a combination of long DRX and short DRX to match DL traffic periodicity.

The example shown in Fig. 12 uses 60 frames per second as an example (e.g., 1000/60 = 50/3) and thus, the long DRX cycle may be set to 50. The short DRX timer may be set to 2, which indicates that there are 2 short DRX cycles within 1 long DRX cycle. When the drx inactivity timer expires or a DRX command MAC CE is received by the UE 110, if the short cycle is used, the cycle may be represented by {[*SFN × 10) + subframe number]modulo (drxLongCycle)}modulo (drxShortCycle) = (drx StartOffset) modulo (drx Short Cycle).*

If the MAC entity is in active time, the UE 110 may monitor the PDCCH in the normal manner. If the PDCCH indicates a new transmission (DL or UL), then the drx inactivity timer is to be started or restarted in the first symbol after the end of the PDCCH reception. In case of SPS or configured grant (CG) XR traffic, the drx inactivity timer may start as well in order to start the short DRX cycle. Thus, as shown in Fig. 12, the MAC procedure may enable the start of the drx inactivity timer with PDSCH reception and PUSCH transmission.

With a 50 ms long DRX cycle, there may be wrap around issues. The techniques described above may also be applied in this instance to mitigate the wrap around issues. For instance, HFN may be utilized so the time to start the long DRX cycle and the short DRX cycle may be represented by ([($HFN \times 10240 + SFN \times 10$) + *subframe number*] *modulo* ($drxLongCycle$)) = drxStartOffset and {[$HFN \times 10240 + (SFN \times 10)$ + *subframe number*]*modulo* ($drxLongCycle$)}*modulo drx ShortCycle = (drxStartOf fset)modulo (drx Short Cycle)*

Here, at SFN or HFN wrap around, the drxStartOffset may be shifted. For example, *drxStartOffset* = 0, *drxLongCycle = 50,drxShortCycle =* 17 at the SFN wrap around, drxStartOffset is changed from 0 to 11 to equal [3456789101112131415160123450123456789101112131415160 1234567891011121314151601 23456789]

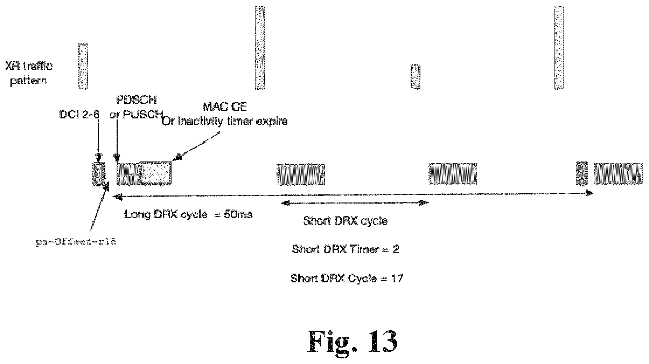

In another approach, a PDCCH WUS may be used to indicated dynamic traffic. Fig. 13 shows an example of using PDCCH WUS to indicate dynamic traffic according to various exemplary embodiments.

Under conventional circumstances, if the UE 110 detects a PDCCH WUS (e.g., downlink control information (DCI) format 2-6) and the PDCCH WUS indicated no wakeup, the UE 110 may skip the DRX cycle. That is, instead of monitoring the PDCCH during an onDuration, the UE 110 may utilize the sleep mode of inactivity. However, in XR, the UE 110 may wakeup every DRX cycle when the DRX cycle matches the traffic periodicity.

The exemplary embodiments use the field within the PDCCH WUS to indicate additional information for the SPS PDSCH and CG PUSCH. For example, differential modulation and coding scheme (MCS) compared to SPS can be sent per UE to adapt the modulation/coding rate on top of the SPS configuration. In another example, the PDCCH WUS may be used to indicate an extension to the resource allocation when packets are relatively large for this DRX cycle.

When adapting the PDCCH WUS, if only long DRX is used, the PDCCH WUS may be transmitted before every DRX and either MCS or resource size for SPS and CG can be adopted before the DRX onDuration. In another embodiment, PDCCH WUS may not be transmitted before short DRX. In this example, at least MCS adaption can be used for all DRX onDurations within he long/short DRX cycle. Fig. 13 shows a gNB configuration to align XR traffic before PDCCH WUS is transmitted.

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. The exemplary embodiments of the above described method may be embodied as a program containing lines of code stored on a non-transitory computer readable storage medium that, when compiled, may be executed on a processor or microprocessor.

Although this application described various embodiments each having different features in various combinations, those skilled in the art will understand that any of the features of one embodiment may be combined with the features of the other embodiments in any manner not specifically disclaimed or which is not functionally or logically inconsistent with the operation of the device or the stated functions of the disclosed embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

It will be apparent to those skilled in the art that various modifications may be made in the present disclosure, without departing from the scope of the disclosure. Thus, it is intended that the present disclosure cover modifications and variations of this disclosure provided they come within the scope of the appended claims.

**Claims**

1. A processor of a user equipment, UE, configured to perform operations comprising:

   receiving channel state information, CSI, configuration information corresponding to downlink new radio, NR, traffic with non-integer periodicity, wherein the CSI configuration information includes one of CSI measurement configuration information, CSI reporting configuration information or CSI measurement configuration information and CSI reporting configuration information;
   receiving CSI measurement resources; and
   reporting CSI feedback to a network.

2. The processor of claim 1, wherein the CSI measurement resources comprise channel measurement resources, CMRs, and interference measurement resources, IMRs, and the IMRs are transmitted by the network with non-integer periodicity.

3. The processor of claim 1, wherein the periodicity of the CSI reporting is a non-integer periodicity based on a downlink semi-persistent scheduling, SPS, periodicity.

4. The processor of claim 1, wherein the periodicity of the CSI reporting is a non-integer periodicity based on one or more downlink semi-persistent scheduling, SPS, periodicities.

5. The processor of claim 1, wherein the periodicity of the CSI measurement resources is a non-integer periodicity based on one or more downlink semi-persistent scheduling, SPS, periodicities.

6. The processor of claim 1, wherein the CSI configuration information included in a radio resource control, RRC, message comprising a first integer, a second integer and an offset integer and wherein the first integer and the second integer are used to derive a non-integer CSI reporting periodicity.

7. The processor of claim 1, wherein the CSI configuration information is included in a radio resource control, RRC, message comprising a first integer, a second integer and an offset integer and wherein the first integer and the second integer are used to derive a non-integer periodicity for channel measurement resources, CMR.

8. The processor of claim 1, wherein the CSI configuration information is included in a radio resource control, RRC, message comprising a first integer, a second integer and an offset integer and wherein the first integer and the second integer are used to derive a non-integer periodicity for interference measurement resources, IMR.

9. The processor of claim 1, the operations further comprising:
receiving an information element, IE, from the network indicating a relationship between downlink semi-persistent scheduling, SPS, and CSI measurement and reporting occasions.

10. The processor of claim 1, wherein a CSI-FrequencyOccupation is determined based on downlink semi-persistent scheduling (SPS) physical downlink shared channel, PDSCH, frequency allocation.

11. The processor of claim 1, wherein a CSI-ReportingBand is determined based on downlink semi-persistent scheduling, SPS, physical downlink shared channel, PDSCH, frequency allocation.

12. A user equipment, comprising:

a transceiver configured to communicate with a network; and
the processor of any of claims 1-11.


**Patentansprüche**

1. Prozessor eines Benutzergeräts, UE, der dazu eingerichtet ist, Operationen auszuführen die Folgendes umfassen:
Empfangen von Kanalzustandsinformations-CSI-Konfigurationsinformation entsprechend Downlink-Newradio NR, -Traffic mit nichtganzzahliger Periodizität, wobei die CSI-Konfigurationsinformation eines von CSI-Messkonfigurationsinformation, CSI-Berichtskonfigurationsinformation oder CSI-Messkonfigurationsinformation und CSI-Berichtskonfigurationsinformation beinhaltet; Empfangen von CSI-Messressourcen; und Berichten einer CSI-Rückmeldung an ein Netzwerk.

2. Prozessor nach Anspruch 1, wobei die CSI-Messressourcen Kanalmessressourcen, CMRs, und Interferenzmessressourcen, IMRs, umfassen und die IMRs durch das Netzwerk mit nichtganzzahliger Periodizität übertragen werden.

3. Prozessor nach Anspruch 1, wobei die Periodizität des CSI-Berichtens eine nichtganzzahlige Periodizität basierend auf einer semipersistenten Downlink-Planungsperiodizität, SPS-Periodizität, ist.

4. Prozessor nach Anspruch 1, wobei die Periodizität des CSI-Berichtens eine nichtganzzahlige Periodizität basierend auf einer oder mehreren semipersistenten Downlink-Planungs-, SPS-, Periodizitäten, ist.

5. Prozessor nach Anspruch 1, wobei die Periodizität der CSI-Messressourcen eine nichtganzzahlige Periodizität basierend auf einer oder mehreren semipersistenten Downlink-Planungs-, SPS-, Periodizitäten, ist.

**6.** Prozessor nach Anspruch 1, wobei die CSI-Konfigurationsinformation in einer Funkressourcensteuerungs-, RRC-, Nachricht beinhaltet ist, die eine erste Ganzzahl, eine zweite Ganzzahl und eine Offset-Ganzzahl umfasst, und wobei die erste Ganzzahl und die zweite Ganzzahl verwendet werden, um eine nichtganzzahlige CSI-Berichtsperiodizität abzuleiten.

**7.** Prozessor nach Anspruch 1, wobei die CSI-Konfigurationsinformation in einer Funkressourcensteuerungs-, RRC-, Nachricht beinhaltet ist, die eine erste Ganzzahl, eine zweite Ganzzahl und eine Offset-Ganzzahl umfasst, und wobei die erste Ganzzahl und die zweite Ganzzahl verwendet werden, um eine nichtganzzahlige Periodizität für Kanalmessressourcen, CMR, abzuleiten.

**8.** Prozessor nach Anspruch 1, wobei die CSI-Konfigurationsinformation in einer Funkressourcensteuerungs-, RRC-, Nachricht beinhaltet ist, die eine erste Ganzzahl, eine zweite Ganzzahl und eine Offset-Ganzzahl umfasst, und wobei die erste Ganzzahl und die zweite Ganzzahl verwendet werden, um eine nichtganzzahlige Periodizität für Interferenzmessressourcen, IMR, abzuleiten.

**9.** Prozessor nach Anspruch 1, wobei die Operationen ferner Folgendes umfassen: Empfangen eines Informationselements, IE, von dem Netzwerk, das eine Beziehung zwischen semipersistenter Downlink-Planung, SPS, und CSI-Mess- und Berichtsgelegenheiten angibt.

**10.** Prozessor nach Anspruch 1, wobei eine CSI-Frequenzbelegung basierend auf einer physikalischen Downlink-Shared-Channel-, PDSCH-, Frequenzzuweisung für semipersistente Downlink-Planung (SPS) bestimmt wird.

**11.** Prozessor nach Anspruch 1, wobei ein CSI-Berichtsband basierend auf einer physikalischen Downlink-Shared-Channel-, PDSCH-, Frequenzzuweisung für semipersistente Downlink-Planung, SPS, bestimmt wird.

**12.** Benutzergerät, das Folgendes umfasst: einen Sendeempfänger, der dazu eingerichtet ist, mit einem Netzwerk zu kommunizieren; und den Prozessor nach einem der Ansprüche 1-11.

**Revendications**

**1.** Un processeur d'un équipement utilisateur, UE, configuré pour effectuer les opérations comprenant :

la réception d'une information de configuration d'information d'état de canal, CSI, correspondant à un trafic New Radio, NR, de liaison descendante avec une périodicité non entière, l'information de configuration CSI comprenant l'une d'entre une information de configuration de mesure CSI, une information de configuration de compte rendu CSI ou une information de configuration de mesure CSI et une information de configuration de compte rendu CSI ;
la réception de ressources de mesure CSI ; et
le compte rendu d'un retour CSI à un réseau.

**2.** Le processeur de la revendication 1, dans lequel les ressources de mesure CSI comprennent des ressources de mesure de canal, CMR, et des ressources de mesure d'interférence, IMR, et les IMR sont transmises par le réseau avec une périodicité non entière.

**3.** Le processeur de la revendication 1, dans lequel la périodicité du compte rendu CSI est une périodicité non entière basée sur une périodicité de planification semi-persistante, SPS, de liaison descendante.

**4.** Le processeur de la revendication 1, dans lequel la périodicité du compte rendu CSI est une périodicité non entière basée sur une ou plusieurs périodicités de planification semi-persistantes, SPS, de liaison descendante.

**5.** Le processeur de la revendication 1, dans lequel la périodicité des ressources de mesure CSI est une périodicité non entière basée sur une ou plusieurs périodicités de planification semi-persistantes, SPS de liaison descendante.

**6.** Le processeur de la revendication 1, dans lequel l'information de configuration CSI incluse dans un message de contrôle de ressource radio, RRC, comprenant un premier entier, un second entier, et un entier de décalage, et dans lequel le premier entier et le second entier sont utilisés pour dériver une périodicité non entière de compte rendu CSI.

**7.** Le processeur de la revendication 1, dans lequel l'information de configuration CSI incluse dans un message de contrôle de ressource radio, RRC, comprenant un premier entier, un second entier, et un entier de décalage, et dans lequel le premier entier et le second entier sont utilisés pour dériver une périodicité non entière pour des ressources de mesure de canal, CMR.

**8.** Le processeur de la revendication 1, dans lequel l'information de configuration CSI incluse dans un message de contrôle de ressource radio, RRC, comprenant un premier entier, un second entier, et un entier de décalage, et dans lequel le premier entier et le second entier sont utilisés pour dériver une périodicité non entière pour des ressources de mesure d'interférence, INR.

**9.** Le processeur de la revendication 1, dans lequel les opérations comprennent en outre :
la réception d'un élément d'information, IE, en provenance du réseau indiquant une relation entre une planification semi-persistante, SPS, de liaison descendante et une mesure CSI et des occasions de compte rendu.

**10.** Le processeur de la revendication 1, dans lequel une occupation de fréquence CSI est déterminée sur la base d'une allocation de fréquence de canal partagé de liaison descendante physique de planification semi-persistante, SPS, PDSCH.

**11.** Le processeur de la revendication 1, dans lequel une bande de compte rendu CSI est déterminée sur la base d'une allocation de fréquence de canal partagé de liaison descendante physique de planification semi-persistante, SPS, PDSCH.

**12.** Un équipement utilisateur comprenant :

un émetteur-récepteur configuré pour communiquer avec un réseau ; et
le processeur de l'une des revendications 1 à 11.

Network Arrangement 100

UE 110

gNB 120A

5G NR RAN 120

Cellular Core Network 130

IMS 150

Internet 140

Network Services Backbone 160

Fig. 1

EP 4 102 884 B1

14

UE 110

Processor 205

| CSI Feedback for XR Engine 235 | | cDRX for XR Engine 240 |

Memory Arrangement 210

Display Device 215

Transceiver 225

I/O Device 220

Other Components 230

**Fig. 2**

EP 4 102 884 B1

EP 4 102 884 B1

Base Station 300

Processor 305

CSI for XR
Engine 330

cDRX
Configuration
for XR 335

Memory
Arrangement
310

Transceiver
320

I/O Device
315

Other
Components
325

**Fig. 3**

| UE 110 | | gNB 120A |
|---|---|---|

CSI measurement and reporting configuration information 405

CSI measurement resources 410

Perform CSI measurements based on the CSI measurement resources 415

CSI Feedback 420

**Fig. 4**

EP 4 102 884 B1

Fig. 5

EP 4 102 884 B1

Fig. 6

```
CSI-ReportPeriodicityAndOffset ::= CHOICE {
    slots4 INTEGER(0..3),
    slots5 INTEGER(0..4),
    slots8 INTEGER(0..7),
    slots10 INTEGER(0..9),
    slots16 INTEGER(0..15),
    slots20 INTEGER(0..19),
    slots40 INTEGER(0..39),
    slots80 INTEGER(0..79),
    slots160 INTEGER(0..159),
    slots320 INTEGER(0..319),
    M1 INTEGER (0...2^16-1)
    M2 INTEGER (0...2^16-1)
    Offset INTEGER (0...2^16-1)
}
```

**Fig. 7**

EP 4 102 884 B1

```
CSI-ResourcePeriodicityAndOffset ::= CHOICE {
    slots4 INTEGER (0..3),
    slots5 INTEGER (0..4),
    slots8 INTEGER (0..7),
    slots10 INTEGER (0..9),
    slots16 INTEGER (0..15),
    slots20 INTEGER (0..19),
    slots32 INTEGER (0..31),
    slots40 INTEGER (0..39),
    slots64 INTEGER (0..63),
    slots80 INTEGER (0..79),
    slots160 INTEGER (0..159),
    slots320 INTEGER (0..319),
    slots640 INTEGER (0..639)
    M1 INTEGER (0...2^16-1)
    M2 INTEGER (0...2^16-1)
    Offset INTEGER (0...2^16-1)

}
```

EP 4 102 884 B1

**Fig. 8**

```
CSI-ResourcePeriodicityAndOffset ::= CHOICE {
    slots4 INTEGER (0..3),
    slots5 INTEGER (0..4),
    slots8 INTEGER (0..7),
    slots10 INTEGER (0..9),
    slots16 INTEGER (0..15),
    slots20 INTEGER (0..19),
    slots32 INTEGER (0..31),
    slots40 INTEGER (0..39),
    slots64 INTEGER (0..63),
    slots80 INTEGER (0..79),
    slots160 INTEGER (0..159),
    slots320 INTEGER (0..319),
    slots640 INTEGER (0..639)
    M1 INTEGER (0...2^16-1)
    M2 INTEGER (0...2^16-1)
    Offset INTEGER (0...2^16-1)

}
```

**Fig. 9**

| CSI-IM conditioned to PDSCH |
|---|

| NZP CSI-RS conditioned to PDSCH |
|---|

| PRB n | PRB n+1 | PRB n+2 | ... | | | PRB m | PRB m+1 | PRB m+2 |
|---|---|---|---|---|---|---|---|---|

| CSI subband -1 | CSI subband -2 | CSI subband-3 | CSI subband-4 | CSI subband -5 |
|---|---|---|---|---|

Alt. 1 reporting bands

PDSCH allocation

Alt. 2 reporting bands

# Fig. 10

Signaling Diagram 1100

UE
110

gNB
120A

cDRX configuration information 1105

Camped on gNB 120A
in the RRC connected
state 1110

onDuration 1115

Control information 1120

**Fig. 11**

PDSCH
or PUSCH

MAC CE
Or Inactivity timer expire

Long DRX cycle

Long DRX cycle = 50ms

Short DRX cycle

Short DRX Timer = 2

Short DRX Cycle = 17

**Fig. 12**

EP 4 102 884 B1

26

XR traffic
pattern

DCI 2-6

PDSCH
or PUSCH

MAC CE
Or Inactivity timer expire

ps-Offset-r16

Long DRX cycle = 50ms

Short DRX cycle

Short DRX Timer = 2

Short DRX Cycle = 17

**Fig. 13**

```
SRS-PeriodicityAndOffset-r16 ::= CHOICE {
    sl1 NULL,
    sl2 INTEGER(0..1),
    sl4 INTEGER(0..3),
    sl5 INTEGER(0..4),
    sl8 INTEGER(0..7),
    sl10 INTEGER(0..9),
    sl16 INTEGER(0..15),
    sl20 INTEGER(0..19),
    sl32 INTEGER(0..31),
    sl40 INTEGER(0..39),
    sl64 INTEGER(0..63),
    sl80 INTEGER(0..79),
    sl160 INTEGER(0..159),
    sl320 INTEGER(0..319),
    sl640 INTEGER(0..639),
    sl1280 INTEGER(0..1279),
    sl2560 INTEGER(0..2559),
    sl5120 INTEGER(0..5119),
    sl10240 INTEGER(0..10239),
    sl40960 INTEGER(0..40959),
    sl81920 INTEGER(0..81919),
    M1 INTEGER (0...2^16-1)
    M2 INTEGER (0...2^16-1)
    Offset INTEGER (0...2^16-1)
    . . .
}
```

**Fig. 14**

```
SRS-PeriodicityAndOffset-r16 ::= CHOICE {
    sl1 NULL,
    sl2 INTEGER(0..1),
    sl4 INTEGER(0..3),
    sl5 INTEGER(0..4),
    sl8 INTEGER(0..7),
    sl10 INTEGER(0..9),
    sl16 INTEGER(0..15),
    sl20 INTEGER(0..19),
    sl32 INTEGER(0..31),
    sl40 INTEGER(0..39),
    sl64 INTEGER(0..63),
    sl80 INTEGER(0..79),
    sl160 INTEGER(0..159),
    sl320 INTEGER(0..319),
    sl640 INTEGER(0..639),
    sl1280 INTEGER(0..1279),
    sl2560 INTEGER(0..2559),
    sl5120 INTEGER(0..5119),
    sl10240 INTEGER(0..10239),
    sl40960 INTEGER(0..40959),
    sl81920 INTEGER(0..81919),
    Frequency {1,2,3,.., 480}
    Offset INTEGER (0...2^16-1)
    . . .
}
```

## Fig. 15

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Contribution by VIVO which discusses challenges and potential enhancements of XR. *3GPP DRAFT; R1-2104398*

- 3rd Generation Partnership Project; Technical Specification Group Radio Access Network; NR; Radio Resource Control (RRC) protocol specification (Release 16). *3GPP TS 38.331*